# EUROPEAN PATENT APPLICATION

(11) **EP 4 120 399 A1**
(43) Date of publication of application: **18.01.2023**
(21) Application number: 21768243.4
(22) Date of filing: 06.03.2021
(51) Int. Cl.: H01M 4/62, H01M 4/139

(54) **CONDUCTIVE MATERIAL DISPERSION, AND METHODS FOR MANUFACTURING POSITIVE ELECTRODE FOR LITHIUM ION SECONDARY BATTERY AND LITHIUM ION SECONDARY BATTERY USING SAME**

(30) Priority: 09.03.2020 JP 2020039799
(71) Applicant: Mikuni Shikiso Kabushiki Kaisha, Himeji-shi Hyogo 671-0234 (JP)
(72) Inventor: KAJIHARA, Rie, Himeji-shi Hyogo 671-0234 (JP)
(74) Representative: Schiener, Jens
(86) International application number: PCT/JP2021/008845
(87) International publication number: WO 2021/182362

(57) **Abstract**

The present application addresses the problem of providing: a conductive material dispersion having excellent performance; and methods for manufacturing a positive electrode for a lithium ion secondary battery and a lithium ion secondary battery, using the same, and in order to solve the problem, said conductive material dispersion contains at least a conductive material, a dispersion medium, a polyvinyl acetal-based resin, and a cellulose-based resin, wherein 10-200 parts by weight of the polyvinyl acetal-based resin is contained with respect to 100 parts by weight of the cellulose-based resin.

## Description

### TECHNICAL FIELD

The present invention provides a conductive material dispersion liquid with excellent dispersibility and conductivity and can maintain appropriate quality for a long period of time, and is suitable as a material for electrode paste used for making electrodes, as well as manufacturing methods for positive electrode for lithium-ion secondary batteries and for lithium-ion secondary batteries using such conductive material dispersion liquid.

### BACKGROUND ART

Lithium-ion secondary batteries have the highest energy density of all batteries in practical use and are increasingly being used in portable electronic devices such as smartphones and in automobiles. In this context, there is a growing demand for more compact, lighter, and longer-lasting lithium-ion secondary batteries, as well as higher performance, such as operation over a wider temperature range and improved safety.

A lithium-ion secondary battery generally consists of electrodes, a separator, and an electrolytic solution containing electrolyte. The electrodes consist of a positive electrode in which an electrode paste containing a positive electrode active material containing lithium ions, a conductive material, and an organic binder is applied and adhered to the surface of a current collector metal foil, and a negative electrode in which an electrode paste containing an electrode active material capable of deinserting lithium ions, a conductive material, and an organic binder are adhered to the surface of a current collector metal foil.

In particular, for the positive electrode, a complex oxide of transition metal and lithium, such as LiCoO₂ used as a positive electrode active material, has low electronic conductivity, and when used alone, sufficient battery performance cannot be obtained. Therefore, attempts have been made to use carbon materials such as carbon black and carbon nanotubes as conductive materials to lower the internal resistance of the battery and bring out the original battery performance.

In order to lower the internal resistance of the battery, it is necessary to form good conductive paths between the current collector and the active material, and between the active material each other, and for this purpose, it is desirable to use conductive materials that exhibit high conductivity, such as carbon black with small particle size and high structure, or carbon nanotubes with long and thin outer diameter. However, such conductive materials tend to be non-uniform due to their strong cohesive force and cannot bring out sufficient performance as it is, and because of that a method of using a conductive material dispersed in advance in most suitable condition is known, and use of dispersant is proposed (Patent literatures 1 and 2) .

### CITATION LIST

### PATENT LITERATURE

Patent Literature 1 : JP Patent No. 5628503
Patent Literature 2 : JP- Patent publication No.2011-184664

### SUMMARY OF THE INVENTION

### PROBLEMS TO BE SOLVED BY THE INVENTION

However, it was found that the method described in Patent Literature 1 is still not effective enough to suppress the increase in viscosity. In particular, when the concentration of the conductive material is high, the viscosity of the conductive material dispersion liquid increases significantly, making it difficult to handle. In addition, the storage stability of the conductive material dispersion liquid is insufficient, and the viscosity increases over time. When such conductive material dispersion liquid is used to make electrode paste by blending with active material, binder and optional additives, not only the conditions during kneading fluctuate and productivity decreases, but also stable quality may not be assured due to unbalanced coverage of conductive material to active material in some areas.

To avoid such problem, it is conceivable to use a low-concentration conductive material dispersion liquid, but in such case, the amount of solvent used will increase and the load in the drying process will increase. In addition, the degree of freedom in electrode composition design is reduced in order to keep the electrode paste within the appropriate viscosity range, which may hinder the development of higher performance.

### SOLUTION TO THE PROBLEMS

The present inventor has intensively studied diligently to solve the above problems, and by finding that the viscosity can be kept low even at high concentrations and that the storage stability is excellent by using a specific combination of resins, accomplished the present invention.

Namely, the present invention provides a conductive material dispersion liquid that has excellent storage stability and can contain a high concentration of conductive material, and is suitable for positive electrodes of lithium-ion secondary batteries, and methods for manufacturing lithium-ion secondary batteries and for positive electrodes for lithium-ion secondary batteries using such a conductive material dispersion liquid.

### ADVANTAGEOUS EFFECTS OF THE INVENTION

The present invention enables the use of conductive material dispersion liquid in which conductive material is dispersed at a high concentration in a dispersing medium, thereby reducing kneading time during electrode paste production, and at the same time suppressing in-plane variation of the finished positive electrode, thereby providing lithium-ion secondary batteries with stable quality. In addition, since the solid content of the electrode paste can be increased by this invention, not only can the drying process time be shortened, but the absolute amount of solvent used can be reduced, thereby reducing the burden of solvent regeneration. In other words, the environmental burden can be reduced.

### DESCRIPTION OF EMBODIMENTS

Thus, the essential features of the present invention reside in:
(1) A conductive material dispersion liquid containing at least a conductive material, a dispersion medium, a polyvinyl acetal resin and a cellulose resin, wherein 10 to 200 parts by weight of polyvinyl acetal resin to 100 parts by weight of cellulose resin is contained;
(2) The conductive material dispersion liquid according to the above feature (1), wherein the conductive material is a carbon black with a primary particle diameter of 30 nm or less and a DBP oil absorption of 160 to 250 ml/100 g;
(3) The conductive material dispersion liquid according to the above feature (1) or (2), wherein the average degree of polymerization of polyvinyl acetal resin is 100 to 600;
(4) The conductive material dispersion liquid according to any one of the above features (1) to (3), wherein weight average molecular weight of cellulose resin is from 5000 to 50000;
(5) A production method of a positive electrode for a lithium-ion secondary battery characterized in that a conductive material dispersion liquid according to the above features (1), (2), (3) or (4), electrode active material, and binder are mixed, applied to the electrode substrate, and dried; and
(6) A production method of a lithium-ion secondary battery characterized in that a conductive material dispersion liquid according to the above features (1), (2), (3) or (4), electrode active material and binder are mixed, applied to an electrode substrate and dried, and then incorporated as the positive electrode.

### [Conductive material dispersion liquid]

A conductive material dispersion liquid of the present invention contains at least a dispersion medium, a conductive material, a polyvinyl acetal resin, and a cellulose resin.

### <About the Dispersion Medium>

The dispersion medium used in the present invention is not particularly limited, but since polyvinylidene fluoride is generally used as a binder for batteries, it is necessary to dissolve it. Therefore, N-methyl-2-pyrrolidone is generally suitable. As long as the binder can be dissolved uniformly, other ingredients may be mixed in.

### <About Polyvinyl Acetal Resin>

The conductive material dispersion liquid of the present invention contains a polyvinyl acetal resin.

Polyvinyl acetal resins are generally obtained by acetalizing polyvinyl alcohol resins (abbreviated as PVA) through dehydration-condensation with aldehydes, and comprises at least the following 3 types of repeating units: acetal group-containing units (obtained by acetalizing vinyl alcohol units of PVA); hydroxyl group-containing units (derived from vinyl alcohol units of PVA); and acetyl group-containing units (derived from the unsaponified portion during PVA production). Thus, it is typically represented by the following formula (Formula 1).

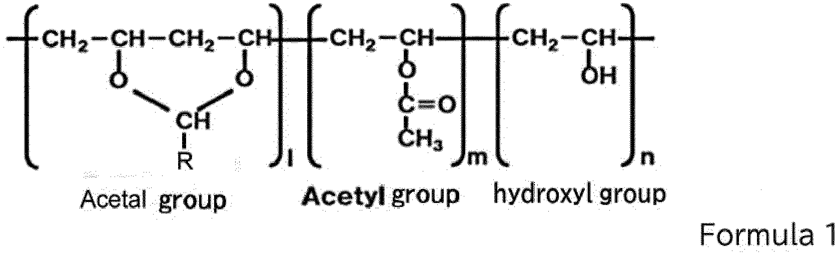

The polyvinyl acetal resins used in the present invention are not particularly limited, and various commercial products can be used alone or in combination of two or more types. The acetal group is not particularly limited, and various polyvinyl acetal resins synthesized by publicly known methods can be used. Examples of such resins include: polyvinyl butyral resin in which R is a butyl group, polyvinyl acetoacetal resin in which R is an acetyl group, etc.

In Formula 1, preferably l is 50 to 90 mol%, m is 0 to 10 mol%, n is 10 to 50 mol%. Particularly preferred are 50 to 80 mol% for l, 0 to 5 mol% for m, and 15 to 40 mol% for n.

Commercially available products include Eslec B BL-1, Eslec B BL-10, Eslec B BL-S, Eslec B BX-L, Eslec K KS-10 (these are trade names, manufactured by Sekisui Chemical Co., Ltd.), Mowital B14S, Mowital B16H, Mowital B20H, Mowital B30T, Mowital B30H, Mowital B30HH, Mowital B45M, Mowital B45H, Mowital B60T, Mowital B60H, Mowital B60HH, and Mowital 75H (these are trade names, manufactured by Kuraray Co.), and the like.

Among these, polyvinyl acetal resin with an average degree of polymerization of 100 to 600 is particularly good, preferably 150 to 600, and more preferably 200 to 500. The average degree of polymerization can be measured according to JIS K6726.

Among these, one that dissolves well in the solvent may be selected, and when N-methyl-2-pyrrolidone is used, Eslec BL-1, Eslec BL-10, Eslec BX-L, Mowital B14S, Mowital B16H, and Mowital B20H are suitable.

### <About cellulose resins>

The conductive material dispersion liquid of the present invention contains cellulose resin.

The cellulose resin used in this invention is not limited, as far as the polymer have a cellulose skeleton, specifically alcohol solubilized butyrate of cellulose, cellulose acetate, cellulose acetate butyrate, cellulose butyrate, cyanoethyl cellulose, methyl cellulose, ethyl cellulose, hydroxyethyl cellulose, ethyl hydroxyethyl cellulose, nitrocellulose, carboxymethyl cellulose, sodium carboxymethyl cellulose, ammonium carboxymethyl cellulose, hydroxyethyl cellulose, hydroxypropyl cellulose, hydroxypropyl methyl cellulose, etc.

Of these, particularly suitable are polymers with a weight average molecular weight of 5,000 to 200,000, preferably with a weight average molecular weight of 5,000 to 100,000, and more preferably cellulose resins with a weight average molecular weight of 5,000 to 50,000.

Among these, one that dissolves well in the solvent may be selected, and when N-methyl-2-pyrrolidone is used, cellulose acetate, cellulose acetate butylate, methyl cellulose, ethyl cellulose, hydroxyethyl cellulose, ethyl hydroxyethyl cellulose, hydroxyethyl cellulose, hydroxypropyl cellulose, and hydroxypropyl methyl cellulose are suitable. In addition, cellulose acetate and methyl cellulose are good in terms of resistance to electrolytic solution, and methyl cellulose is the most preferred in terms of both of these properties.

### <About the amount of polyvinyl acetal resin and cellulose resin added and the mixing ratio>

The total amount of polyvinyl acetal resin and cellulose resin in the conductive material dispersion liquid is preferably 3 to 30 parts by weight, preferably 5 to 20 parts by weight, more preferably 6 to 15 parts by weight for 100 parts by weight of conductive material.

If the content of polyvinyl acetal resin and cellulose resin is too small, the agglomerates of the conductive material are not dissolved sufficiently and remain in a non-uniform state, and the conductivity of the coating film produced by the electrode paste made by blending such conductive material dispersion liquid with active material and organic binder tends to be low. If the content of polyvinyl acetal resin and cellulose resin in the conductive material dispersion liquid is too high, the conductivity will decrease due to an increase in the resistive component in the coating film made from the electrode paste obtained using this conductive material dispersion liquid, and if a lithium-ion secondary battery with a positive electrode made from such a coating film is formed, it would be difficult to achieve high capacity.

Also, the present invention contains the aforementioned polyvinyl acetal resin and cellulose resin in a certain ratio. That is, it is characterized that, for every 100 parts by weight of cellulose resin, 10 to 200 parts by weight of polyvinyl acetal resin is contained.

By including these resins in this ratio, a conductive material dispersion liquid with uniformity and good stability can be obtained, and excellent effect of low viscosity and good stability of the conductive material dispersion liquid is obtained. 10 to 150 parts by weight per 100 parts by weight of cellulose resin is preferred, and 25 to 100 parts by weight per 100 parts by weight of cellulosic resin is more preferred.

### <About Conductive Materials>

Carbon black, carbon nanotubes, carbon nanofibers, graphite, graphene, hard carbon, etc. are suitable as conductive materials used in the present invention. Ketjen black, furnace black, acetylene black, thermal black, and the like can be used as carbon black. One or more of these conductive materials can be used alone or in combination.

The average primary particle diameter of carbon black is preferably 50 nm or less, 40 nm or less is particularly preferred, and 30nm or less is most particularly preferred. An average primary particle diameter of 10 nm or more is preferred, and 15 nm or more is particularly preferred. If the average primary particle size of carbon black is too large, conductivity of the coating film obtained from the electrode paste tends to decrease. If it is too small, the viscosity of the conductive material dispersion liquid and electrode paste may become too high, making it difficult to disperse the carbon black, and thus, the conductivity may not be sufficient.

The average primary particle size is the arithmetic mean particle diameter measured using a transmission electron microscope, as defined in ASTM: D3849 -14. The average primary particle size is generally used to evaluate the physical properties of conductive materials.

The DBP oil absorption of carbon black is preferably 160 to 250 ml/100g, more preferably 170 to 240 ml/100g, most preferably 170 to 230 ml/100g. If the DBP oil absorption of carbon black is too small, the link between carbon black particles is short and lacks conductivity. If it is too large, the viscosity of the conductive material dispersion liquid and electrode paste may become too high, making it difficult to disperse the carbon black, and thus, it may not provide sufficient conductivity.

The DBP oil absorption can be measured in accordance with JIS 6217-4. The DBP oil absorption is used as an indicator of conductivity because it reflects the degree of development of aggregates called structures, which are carbon black particles in a state of being fused each other.

The dispersed particle size of carbon black in the dispersion is preferably 40µm or less as the maximum particle size, 30µm or less is more preferable, and 20 µm or less is more preferable. Generally, the average particle diameter is used to control the particle state of dispersions of conductive materials and the like. However, when the average particle diameter is used, the existence of coarse particles is not taken into account. Therefore, even when the average particle diameter value is small, coarse particles exceeding 40µm in diameter as the maximum particle diameter may actually exist. In such case, the distribution of active material and conductive material in the electrode coating film of lithium-ion secondary batteries may become non-uniform, which may impair battery performance.

The maximum particle size may be measured using a grind gauge in accordance with JIS K5600-2-5.

The purity of carbon black is preferably 99.90 to 100 weight %, preferably 99.95 to 100%. The purity of carbon black may be calculated by determining ash content obtained using JIS K1469 or JIS K6218 as impurities, and calculating based on the amount of impurities.

Carbon blacks with these characteristics include acetylene black, specifically DENKA BLACK powder, DENKA BLACK granular, DENKA BLACK FX-35, DENKA BLACK HS-100, DENKA BLACK Li Li-100, DENKA BLACK Li Li-250, DENKA BLACK Li Li-400, DENKA BLACK Li Li-435, and the like (these are trade names, manufactured by DENKA Corporation). Of these, DENKA BLACK FX-35 and DENKA BLACK Li Li-435 are particularly suitable.

Carbon nanotubes are carbon crystals with a substantially cylindrical shape. The average outer diameter of carbon nanotubes is preferably 90 nm or less, 30 nm or less is particularly preferred, 20 nm or less is even more preferred, and 15 nm or less is most preferred. The average outer diameter of the carbon nanotubes is preferably 1 nm or more, or 5 nm or more. If the average outer diameter of the carbon nanotubes is too large, the conductivity of the coating film obtained from the electrode paste tends to decrease. If it is too small, the viscosity of the conductive material dispersion liquid and electrode paste may become too high, making it difficult to disperse the carbon nanotubes.

The average outer diameter of carbon nanotubes is the arithmetic mean of the outer diameters of a sufficient sample number of carbon nanotubes measured using an image of a transmission electron microscope at a magnification of 100,000 times or more.

As carbon nanotubes, specifically, there are: VGCF-X manufactured by Showa Denko K.K. (average outer diameter of 30 nm), C100 manufactured by ARKEMA (average outer diameter 10-15 nm), U100 by ARKEMA (high purity product with average outer diameter 10-15 nm), NC7000(average outer diameter 10 nm), NC2150, NC3100 manufactured by Nanocyl, BaytubesC150 (average outer diameter 13-16 nm), BaytubesC150P (average outer diameter 13-16 nm) manufactured by Bayer Inc., and MWNT (average outer diameter 40-90 nm) manufactured by Hodogaya Chemical Co. and others. One type of carbon nanotube can be used alone or in combination with two or more types of carbon nanotubes.

When the conductive material dispersion liquid of the present disclosure contains carbon nanotubes, it is preferable that the carbon nanotubes are dispersed so that each tube is independently dispersed without aggregation. This is because the conductivity of the coating film obtained from the electrode paste is excellent.

It is also acceptable to use a combination of several types of conductive materials such as carbon black, carbon nanotubes, and the like.

As the amount of conductive material contained in the conductive material dispersion liquid, 10 to 30% by weight is suitable, preferably 12 to 25wt%, and more preferably 13 to 22wt%.

If the contained amount of the conductive material in the conductive material dispersion liquid is excessively small, the total solid content at the time of preparing the electrode paste decreases and the viscosity becomes lower than an appropriate viscosity, so that unevenness occurs and a non-uniform coating film is formed. The non-uniform coating film refers to a coating film in which the active material and the conductive material are unevenly distributed, or a coating film whose weight per unit area (applied amount on a current collector) varies depending on the position. When a lithium-ion secondary battery having a positive electrode consisting of a coating film in which the active material and the conductive material are unevenly distributed is produced, the electric conductivity may be lowered, or the electric charge may be made un-uniform, so that performance such as high-speed charging/discharging and durability may be impaired. When a plurality of lithium-ion secondary batteries is produced by using a coating film whose weight per unit area varies depending on the position, the capacity of each lithium-ion secondary battery varies, so that the yield may deteriorate. If the contained amount of the conductive material in the conductive material dispersion liquid is excessively large, the fluidity of the conductive material dispersion liquid may decrease, and the handling at the time of preparing the electrode paste may deteriorate.

### <About Optional Component>

The conductive material dispersion or the present invention may contain optional components other than conductive material, cellulose resin, polyvinyl acetal resin, and dispersion medium as appropriate within the scope of the purpose of the present invention. Such optional components include, for example, dispersants (components other than the cellulose resin and polyvinyl acetal resin mentioned above, that have the function of dispersing the conductive material); phosphorus compounds; sulfur compounds; organic acids; nitrogen compounds such as amine compounds and ammonium compounds; organic esters; and various silane-based, titanium-based, and aluminum-based coupling agents and other conventionally known additives. One or more of the optional components can be used alone or in combination.

Dispersants include, for example, nonionic dispersants such as polyvinylidene fluoride, polytetrafluoroethylene, polyhexafluoropropylene, polyethylene, polypropylene, polymethyl methacrylate, polyvinyl chloride, polyvinylidene chloride, polyvinyl acetate, polyacrylic acid, polyvinyl butyral, polyacrylamide, polyurethane, polydimethylsiloxane, epoxy resin, acrylic resin, polyester resin, melamine resin, phenol resin, various rubbers, lignin, pectin, gelatin, xanthan gum, welan gum, succinoglycan, polyvinyl alcohol, polyalkylene oxide, polyvinyl ether, polyvinyl pyrrolidone, chitins, chitosans, starches, and the like.

The blending amount of a dispersant per 100 parts by weight of the conductive material is preferably 0.1 to 100 parts by weight and more preferably 0.1 to 50 parts by weight.

Examples of phosphorus compounds include tributylphosphine, triphenylphosphine, triethyl phosphite, triphenyl phosphite, and the like.

Examples of sulfur compounds include butanethiol, n-hexanethiol, diethyl sulfide, tetrahydrothiopene, and the like.

Examples of organic acids include acetic acid, propionic acid, butyric acid, caproic acid, acrylic acid, crotonic acid, capric acid, stearic acid, oleic acid, oxalic acid, succinic acid, adipic acid, maleic acid, glutaric acid, benzoic acid, 2-methylbenzoic acid, 4-methylbenzoic acid, mixtures of two or more thereof, and the like.

Examples of amine compounds include methylamine, ethylamine, n-propylamine, n-butylamine, n-hexylamine, n-heptylamine, 2-ethylhexylamine, n-octylamine, nonylamine, decylamine, dodecylamine dococylamine, hexadecylamine, octadecylamine, isopropylamine, isobutylamine, isooctylamine, isoamylamine, allylamine, cyanoethylamine, cyclopropylamine, cyclohexylamine, cyclopentylamine, aniline, N,N-dimethylaniline, benzylamine, anisidine, aminobenzonitrile, piperidine, pyrazine, pyridine, pyrrole, pyrrolidine, methoxyamine, methoxyethylamine, methoxyethoxyethylamine, methoxyethoxyethoxyethylamine, methoxypropylamine, ethoxyamine, n-butoxyamine, 2-hexyloxyamine, 2-amino-2-methyl-1-propanol, aminoacetaldehyde dimethylacetal, hydroxyamine, ethanolamine, diethanolamine, methyldiethanolamine, 2-hydroxypropylamine, N-ethyldiethanolamine, N-methyldiethanolamine, aminoethylethanolamine, dimethylethanolamine, triisopropanolamine, triethanolamine, ethylenediamine, propylenediamine, triethylenediamine, triethylenetetramine, hexamethylenediamine, 2-ethyldiamine, 2,2-(ethylenedioxy)bisethylamine, tetramethylpropylenediamine, morpholine, N-methylmorpholine, N-ethylmorpholine, N-methylpiperidine, dimethylamine, diethylamine, dipropylamine, diethylenetriamine, tri-n-butylamine, ammonium hydroxide, imidazole, diazabicycloundecene, diazabicyclooctane, taurine, hydrazine, hexamethyleneimine, polyallylamine, polyethyleneimine, dihydrazide adipate, and the like.

Examples of ammonium compounds include 2-ethylhexylammonium 2-ethylhexylcarbamate, 2-ethylhexylammonium 2-ethylhexylcarbonate, 2-cyanoethylammonium 2-cyanoethylcarbamate, 2-cyanoethylammonium 2-cyanoethylcarbonate, 2-methoxyethylammonium 2-methoxyethylcarbamate, 2-methoxyethylammonium 2-methoxyethylcarbonate, n-butylammonium n-butylcarbamate, n-butylammonium n-butylcarbonate, t-butylammonium t-butylcarbamate, t-butylammonium t-butylcarbonate, isobutylammonium isobutylcarbamate, isobutylammonium isobutylcarbonate, isopropylammonium isopropylcarbamate, triethylenediaminium isopropylcarbamate, isopropylammonium isopropylcarbonate, triethylenediaminium isopropylcarbonate, ethylammonium ethylcarbamate, pyridinium ethylhexylcarbamate, ethylammonium ethylcarbonate, octadecylammonium octadecylcarbamate, octadecylammonium octadecylcarbonate, ammonium carbamate, dioctadecylammonium dioctadecylcarbamate, dioctadecylammonium dioctadecylcarbonate, dibutylammonium dibutylcarbamate, dibutylammonium dibutylcarbonate, triethoxysilylpropylammonium triethoxysilylpropylcarbamate, triethoxysilylpropylammonium triethoxysilylpropylcarbonate, hexamethyleneiminium hexamethyleneiminecarbamate, hexamethyleneiminium ammonium hexamethyleneiminecarbonate, benzylammonium benzylcarbamate, benzylammonium benzylcarbonate, methyldecylammonium methyldecylcarbamate, methyldecylammonium methyldecylcarbonate, morpholinium morpholinecarbamate, morpholinium morpholinecarbonate, 2-ethylhexylammonium bicarbonate, 2-cyanoethylammonium bicarbonate, 2-methoxyethylammonium bicarbonate, t-butylammonium bicarbonate, ammonium bicarbonate, isopropylammonium bicarbonate, dioctadecylammonium bicarbonate, triethylenediaminium bicarbonate, pyridinium bicarbonate, and the like, derivatives or mixtures thereof, and the like.

Examples of organic esters include ethyl acetate, isobutyl acetate, n-butyl acetate, methyl propionate, ethyl propionate, methyl butyrate, methyl acrylate, dimethyl oxalate, dimethyl succinate, methyl crotate, methyl benzoate, methyl 2-methylbenzoate, mixtures thereof, and the like.

Examples of silane coupling agents include vinyltrimethoxysilane, γ-methacryloxypropyl-tris(β-methoxyethoxy)silane, β-(3,4-epoxycyclohexyl)ethyltrimethoxysilane,γ-glycidoxypropyltrimethoxysilane, vinyltriacetoxysilane, γ-mercaptopropyltrimethoxysilane, γ-methacryloxypropyltrimethoxysilane, γ-aminopropyltriethoxysilane, N-β-(aminoethyl)-γ-aminopropyltrimethoxysilane, N-β-(aminoethyl)-γ-aminopropylmethylmethoxysilane, N-β-(aminoethyl)-γ-aminopropylmethyldimethoxysilane, N,N-bis(β-hydroxyethyl)-γ-aminopropyltriethoxysilane, γ-chloropropyltrimethoxysilane, vinyltris(2-methoxyethoxysilane), 2-(3,4-epoxycyclohexyl)ethyltrimethoxysilane, N-phenyl-γ-aminopropyltrimethoxysilane, γ-chloropropyltrimethoxysilane, and the like.

Examples of titanium coupling agents include tetrabutyl titanate, tetraoctyl titanate, isopropyltriisostearoyl titanate, isopropyl tridecyl benzene sulfonyl titanate, bis(dioctylpyrophosphate)oxyacetate titanate, trimethoxy titanate, tetramethoxy titanate, triethoxy titanate, tetraethoxy titanate, tetrapropoxy titanate, chlorotrimethoxy titanate, chlorotriethoxy titanate, ethyltrimethoxy titanate, methyltriethoxy titanate, ethyltriethoxy titanate, diethyldiethoxy titanate, phenyltrimethoxy titanate, phenyltriethoxy titanate, mixtures thereof, and the like.

Examples of aluminum-based coupling agents include various aluminum chelates, alkyl acetoacetate aluminum diisopropylate, aluminum/bisethyl acetate/diisopropyrate, acetoalkoxyaluminum diisopropylate, mixtures thereof, and the like.

### <About the viscosity of the dispersion

The viscosity of the conductive material dispersion liquid of the present invention is preferably from 50 to 5000 mPa·s, more preferably from 80 to 3000 mPa·s, and more preferably from 80 to 2000 mPa·s. If the viscosity of the dispersion is less than 50 mPa·s, it is difficult to control the sedimentation of the conductive material in the dispersion liquid, and difficult to maintain the quality for a long period of time. Furthermore, the viscosity of the electrode paste made by mixing the active material, binder, and conductive material dispersion liquid would fall below the optimum range, making it difficult to create a uniform coating film of the desired thickness. If the viscosity of the dispersion liquid exceeds 5000 mPa·s, the viscosity of the electrode paste also raise and kneading and coating becomes difficult.

] The viscosity of the conductive material dispersion liquid may be measured in accordance with JIS K7117-1 using a B-type viscosity meter.

### <Producing Method of Conductive Material Dispersion Liquid>

The method of producing the conductive material dispersion liquid of the present invention is not limited as long as each of the ingredients described above is contained in the prescribed proportions and the desired viscosity is achieved, but the following method is preferred.

First, dissolve the polyvinyl acetal resin and cellulose resin in a dispersion medium (N-methyl-2-pyrrolidone is preferred). The solution is mixed with optional components and conductive materials as needed, and then dispersed by a bead mill or other general dispersing device while crushing agglomerated conductive materials, and such dispersing process is continued until a predetermined viscosity is achieved. In this way, a conductive material dispersion liquid with a predetermined particle diameter and viscosity at a predetermined concentration can be obtained.

For the dispersing device, a device capable of dispersing particles with a maximum diameter of 20 µm or less is preferred, but it is not particularly limited to bead mills, and also ball mills, jet mills and the like can be mentioned.

### [Use of the conductive material dispersion liquid in lithium-ion secondary batteries]

As usage of the conductive material dispersion liquid of the present invention, it can be mixed with positive electrode active material and binder to make an electrode paste to be applied to an electrode substrate, and a lithium-ion secondary battery may be obtained. Various conventionally known methods can be employed. As a typical example, the conductive material dispersion liquid of the present invention is mixed with positive electrode active material and binder to make a slurry, which is then applied to the electrode substrate, dried, and an electrode is formed. This electrode is used as the positive electrode of the lithium-ion secondary battery, and a separator, a porous insulating material, is placed between it and the negative electrode made of graphite or other carbon material, then is rolled into a cylindrical or flat shape according to the shape of the container and stored, into which the electrolytic solution is injected. The lithium-ion secondary battery obtained in such way can maintain its performance even after repeated charge-discharge cycles over a long period of time.

### Example.

Hereinafter, the present disclosure will be described in detail based on examples, but the technical scope thereof is not limited by these examples.

The carbon black, polyvinyl acetal resin, cellulose resin, active material, and binder used in the examples and comparative examples are listed below.

### <Carbon Black>

DENKA BLACK Li Li-435 (Trade name. Manufactured by Denka k.k.): Acetylene black, primary particle size 23 nm, DBP oil absorption 220ml/100g, hereafter abbreviated as Li-435.

### <Polyvinyl Acetal Resin>

Eslec B BL-1 (Trade name, manufactured by Sekisui Chemical Co., Ltd.): Polyvinyl butyral resin, average degree of polymerization 300, hydroxyl group content 36 mol%, degree of butyralization 63 mol%, hereinafter abbreviated as BL-1.

Eslec-B BL-10 (trade name, manufactured by Sekisui Chemical Co., Ltd.): Polyvinyl butyral resin, average degree of polymerization 250, hydroxyl group content 28 mol%, degree of butyralization 71 mol%, hereinafter abbreviated as BL-10.

Eslec B BX-L (trade name, manufactured by Sekisui Chemical Co., Ltd.): Polyvinyl acetal resin, average degree of polymerization 250, hydroxyl group content 32 mol%, acetalization 67 mol%, hereinafter abbreviated as BX-L.

Mowital B16H (trade name, manufactured by Kuraray Co., Ltd.): Polyvinyl butyral resin, average degree of polymerization 250-300, hydroxyl group content 26-30 mol%, degree of butyralization 70-73 mol%, hereafter abbreviated as B16H.

Mowital B20H (trade name, manufactured by Kuraray Co., Ltd.): Polyvinyl butyral resin, average degree of polymerization 250-500, hydroxyl group content 26 to 30 mol%, degree of butyralization 70 to 73 mol%, hereafter abbreviated as B20H.

### <Cellulose Resin>

Methylcellulose: Weight-average molecular weight 35000-45000, methoxy group degree of substitution 1.8, hereinafter abbreviated as MC. The weight-average molecular weight can be measured using gel filtration chromatography. An example of the measurement conditions for gel filtration chromatography is shown below.
Apparatus: Prominence (Shimadzu Corporation)
Column: OHpakSB-802.5HQ (manufactured by Shodex Corporation), OHpakSB-804HQ (manufactured by Shodex Corporation)
Detector: RI
Eluent: 0.5M NaCl solution
Flow rate: 1.0 ml/min
Sample concentration: 0.2 wt/vol%
Column temperature: 40°C

### <Active Material>

CellSeed C-5H (Trade name, manufactured by Nippon Chemical Industry Co., Ltd.): Active material for positive electrode, lithium cobaltate (LiCoO₂), D₅₀ 7.2µm, specific surface area 0.46 m ²/g, hereinafter abbreviated as LCO.

### <Binder>

KF POLYMER W #1100 (Trade name, manufactured by Kureha Corporation): Polyvinylidene fluoride, average molecular weight 280000, hereinafter abbreviated as PVDF.

] Various evaluations in the examples and comparative examples were performed by the following methods.

### < Viscosity of Dispersion Liquid, Storage Stability of Dispersion Liquid>

The viscosity of the conductive material dispersion liquid prepared by the method described in Example 1 was measured using a B-type viscometer (TVB-10: Trade name, manufactured by Tohki Sangyo k.k.) at 25°C and rotating at speed of 60 rpm. The value after 60 seconds is used.

The storage stability of the dispersion liquid was evaluated by measuring the viscosity of each dispersion liquid after one week of standing at 25°C, and evaluating the degree of change from the initial viscosity of each dispersion liquid using the following criteria.
○: The absolute value of the amount of change from the initial viscosity is 10% or less.
△: The absolute value of the amount of change from the initial viscosity is more than 10% and equal or less than 15%.
×: The absolute value of the amount of change from the initial viscosity exceeds 15%.

### <Storage Stability of Electrode Paste>

In a plastic container, 16.45 parts by weight of LCO, 3.22 parts by weight of PVDF solution (0.48 parts by weight of PVDF), 2.63 weight parts of conductive material dispersion liquid obtained in the Examples and Comparative Examples, and 2.70 parts by weight of N-methyl-2-pyrrolidone were added, and mixed and kneaded by means of Awatori Rentaro (trade name, manufactured by Shinky Co. Ltd.), and electrode paste was obtained. The polyvinyl acetal resin and cellulose resin contained in the conductive material dispersion liquid were considered as binder component, and the amount together with the added PVDF was considered as the total binder amount.

The viscosity of the obtained electrode paste was measured using a rheometer under the following conditions.
Apparatus: HAAKE MARSIII (Thermo Fisher Scientific Corporation)
Sensor: Cone C35/1°
Measurement temperature: 25°C
Shear rate: 10s ⁻¹
Measurement time: 60 sec.

The storage stability of the electrode pastes was evaluated by measuring the viscosity of each electrode paste after one week of standing at 25°C and evaluating the degree of change from the initial viscosity of each electrode paste using the following criteria. When measuring the viscosity of the electrode pastes after one week, the pastes were mixed at 2000 rpm for 20 seconds in advance with Awatori Rentaro to disperse sedimentation.
⊚: The absolute value of the amount of change from the initial viscosity is no more than 10%.
○: The absolute value of the amount of change from the initial viscosity is more than 10% and less or equal to than 15%.
△: The absolute value of the amount of change from the initial viscosity is more than 15% and less than or equal to 20%.
×: The absolute value of the amount of change from the initial viscosity exceeds 20%.

### (Example 1)

In a plastic bottle, 78.4 parts by weight of N-methyl-2 pyrrolidone as dispersing medium, 1.12 parts by weight of MC, and 0.48 parts by weight of BL-1 were added, and dissolved by mixing. Then, 20 weight parts of Li-435 is added, and using zirconia beads as media, dispersing process was conducted by means of a paint shaker for 6 hours, and the conductive material dispersion liquid was obtained. The " viscosity of dispersion liquid," "storage stability of dispersion liquid," and "storage stability of electrode paste", were determined respectively by the above described methods. The results are shown in Table 1.

### (Examples 2-10, Comparative Examples 1-11)

Conductive material dispersion liquids were obtained in the same manner as in Example 1, except that the compositions (polyvinyl acetal resin type and mixing ratio) shown in Table 1 were changed. Various measurements of the obtained conductive material dispersion liquids were also made in the same manner. The results are shown in Table 1.

### [Table 1]

**Table 1**

| | composition | | | | evaluation | | | | | |
|---|---|---|---|---|---|---|---|---|---|---|
| | type of cellulose resin | type of polyvinyl acetal resin | mixing ratio | | conductive material dispersion liquid | | | electrode slurry | | |
| | | | cellulose resin | polyvinyl acetal resin | initial viscosity (mPa · s) | change ratio | storage stability | 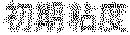 (mPa · s) | change ratio | storage stability |
| example 1 | MC | BL-1 | 100 | 43 | 1825 | 8% | ○ | 1706 | -8% | ⊚ |
| example 2 | MC | BL-10 | 100 | 43 | 1415 | 13% | △ | 1535 | -5% | ⊚ |
| example 3 | MC | BX-L | 100 | 43 | 1472 | -6% | ○ | 1594 | -4% | ⊚ |
| example 4 | MC | B16H | 100 | 43 | 1755 | 10% | △ | 1602 | -10% | ○ |
| example 5 | MC | B20H | 100 | 43 | 1629 | 9% | ○ | 1781 | -26% | × |
| example 6 | MC | BL-1 | 100 | 100 | 2320 | 7% | ○ | 1635 | -12% | ○ |
| example 7 | MC | BL-10 | 100 | 100 | 2540 | 22% | × | 1647 | -20% | × |
| example 8 | MC | BX-L | 100 | 100 | 2810 | -6% | ○ | 1724 | ' -16% | △ |
| example 9 | MC | B16H | 100 | 100 | 3020 | 5% | ○ | 1510 | -14% | ○ |
| example 10 | MC | B20H | 100 | 100 | 2240 | -1% | ○ | 1394 | -14% | ○ |
| comp.ex.1 | MC | - | 100 | - | 2910 | 46% | × | 2672 | -33% | × |
| comp.ex.2 | - | BL-1 | - | 100 | 3220 | -16% | △ | 1587 | -18% | △ |
| comp.ex.3 | - | BL-10 | - | 1 00 | 3460 | -3% | ○ | 1567 | -15% | △ |
| comp.ex.4 | - | BX-L | - | 100 | 4980 | -6% | ○ | 1673 | -19% | △ |
| comp.ex.5 | - | B16H | - | 100 | 3340 | -1% | ○ | 1345 | -24% | × |
| comp.ex.6 | - | B20H | - | 100 | 3970 | -11% | △ | 1562 | -14% | ○ |
| comp.ex.7 | MC | BL-1 | 100 | 233 | 3300 | -10% | △ | 1546 | -14% | ○ |
| comp.ex.8 | MC | BL-10 | 100 | 233 | 4190 | -6% | ○ | 1619 | -12% | ○ |
| comp.ex.9 | MC | BX-L | 100 | 233 | 2940 | -6% | ○ | 1562 | -24% | × |
| comp.ex.10 | MC | B16H | 100 | 233 | 4090 | -8% | ○ | 1493 | -12% | ○ |
| camp.ex.11 | MC | 520H | 100 | 233 | 2720 | -10% | △ | 1469 | -16% | △ |

The results shown in Table 1 indicate that the conductive material dispersion liquids of Examples 1-10 containing polyvinyl acetal resin and cellulose resin have an initial viscosity of 2000 mPa·s or less, and especially the storage stability of the electrode pastes of Examples 1 to 3 has the lowest absolute change of viscosity of 10% or less from the initial viscosity.

Comparative Examples 1 to 6, which contain only one of the two resins, and Comparative Examples 7 to 11, in which the mixing ratio of polyvinyl acetal resin and cellulose resin is out of the range of the present invention, show the initial viscosity of the conductive material dispersion liquid exceeding 2000 mPa·s, which significantly impairs handling. Thus, it can be seen that the conductive material dispersion liquid of the present invention is superior to the comparative examples in both initial viscosity and storage stability, and is highly effective in improving the storage stability of electrode pastes.

### INDUSTRIAL APPLICABILITY

As described above, it can be seen that the present invention can provide a conductive material dispersion liquid with excellent performance, a manufacturing method for a positive electrode for lithium-ion battery, and a manufacturing method for lithium-ion secondary battery, using such conductive material dispersion liquid.

## Claims

1. A conductive material dispersion liquid containing at least a conductive material, a dispersion medium, a polyvinyl acetal resin and a cellulose resin, wherein 10 to 200 parts by weight of polyvinyl acetal resin for 100 parts by weight of cellulose resin is contained.

2. The conductive material dispersion liquid according to claim 1, wherein the conductive material is a carbon black with a primary particle diameter of 30 nm or less and a DBP oil absorption of 160 to 250 ml/100 g.

3. The conductive material dispersion liquid according to claim 1 or 2, wherein the average degree of polymerization of the polyvinyl acetal resin is 100 to 600.

4. A conductive material dispersion liquid according to any one of claims 1 to 3, wherein weight average molecular weight of cellulose resin is from 5000 to 50000.

5. A production method of a positive electrode for a lithium-ion secondary battery, **characterized in that** a conductive material dispersion liquid according to claim 1, 2, 3 or 4, electrode active material, and binder are mixed, applied to an electrode substrate, and dried.

6. A production method of a lithium-ion secondary battery, **characterized in that** a conductive material dispersion liquid according to claim 1, 2, 3, or 4, electrode active material, and binder are mixed, applied to an electrode substrate and dried, and then incorporated as the positive electrode.
